# EUROPÄISCHE PATENTSCHRIFT

(11) **EP 3 192 470 B1**
(45) Veröffentlichungstag und Bekanntmachung des Hinweises auf die Patenterteilung: **05.08.2020**
(21) Anmeldenummer: 17000043.4
(22) Anmeldetag: 11.01.2017
(51) Int. Cl.: A61C 8/00

(54) **ZAHNIMPLANTAT MIT EINEM MEHRFACHGEWINDE**
DENTAL IMPLANT WITH A MULTIPLE THREAD
IMPLANT DENTAIRE COMPRENANT UN FILETAGE A FILETS MULTIPLES

(30) Priorität: 12.01.2016 DE 102016000167
(43) Veröffentlichungstag der Anmeldung: 19.07.2017
(73) Patentinhaber: Milbrodt, Bernd, 53177 Bonn (DE)
(72) Erfinder: Milbrodt, Bernd, 53177 Bonn (DE)
(74) Vertreter: Kirschner, Sebastian

(56) Entgegenhaltungen:
- EP-A1- 1 943 979
- EP-A1- 2 002 799
- EP-A1- 2 233 108
- DE-U1-202007 004 943
- JP-A- H07 275 276
- US-A- 5 885 079

## Beschreibung

Die Erfindung betrifft ein Zahnimplantat mit den Merkmalen des Oberbegriffes des Patentanspruches 1.

Im Stand der Technik sind eine Vielzahl von unterschiedlich ausgestalteten, enossalen Zahnimplantaten mit einem Schraubgewinde bekannt. Die in einen Kieferknochen eingeschraubten Zahnimplantate verbinden sich in der Regel innerhalb von mehreren Monaten mit den umgebenden Knochen zu einer festen, belastungsfähigen Trägereinheit. Dieser Prozess wird als Osseointegration bezeichnet. Zahnimplantate mit einem Schraubgewinde haben den Vorteil, dass die Zahnimplantate sich durch das Schraubgewinde sofort im Knochen festsetzen, was eine primäre Stabilität ergibt. Die Primärstabilität ermöglicht beim Eindrehen ab einem Drehmoment von insbesondere 35Ncm eine sofortige Belastungsmöglichkeit. Die Primärstabilität zeigt sich in der OP-Sitzung. Die dauerhafte Belastungsfähigkeit des Zahnimplantats und damit die Fähigkeit zur Aufnahme von einer Kaudruckbelastung ergibt sich aus der Besiedelung der Oberfläche es Zahnimplantats mit Knochenzellen. Dieser Prozess wird als Osseointegration bezeichnet. Es kann sich ein Teil des Implantatkörpers ausgehend von einer zylindrischen Grundform apikalwärts verjüngen, so dass insgesamt eine Konusform entsteht. Es sind Zahnimplantate aus dem Werkstoff Titan und auch aus anderen Werkstoffen bekannt. Beispielsweise sind sogenannte Keramikimplantate bekannt. Diese Keramikimplantate weisen einen Implantatkörper auf, der insbesondere aus dem Werkstoff Zirconiumdioxid gefertigt ist. Dieser Werkstoff wird auch mit dem Begriff "Zirkonoxid" bezeichnet.

Aus der WO 2007/090529 A1 ist ein Zahnimplantat in Form eines einteiligen oder aus mehreren Teilen bestehenden Keramikimplantats bekannt. Das Keramikimplantat kann auf einfache Weise mit einer aufgerauhten Oberfläche versehen werden, wobei die Hydrophilie und die Benetzungsfähigkeit gesteigert werden, um das Einwachsen des Implantats in den Knochen zu erleichtern. Das Implantat wird in einem Sinterverfahren hergestellt. Die Oberflächenrauigkeit des Implantats ist bereits vor einem abschließenden Sintervorgang erhöht. Die gesamte Implantatoberfläche weist somit eine bestimmte Rauhigkeit auf. Die Oberfläche des Implantats wird dabei in dem Bereich aufgerauht, in dem beim Einsetzen des Implantats in den Knochen Reibkontakt zwischen dem Implantat und dem Knochen auftritt. Durch die aufgerauhte Oberfläche des Implantats wird beim Einschrauben des Zahnimplantats in den Knochen Knochenmaterial abgerieben. Dieser Knochenabrieb soll dazu beitragen, dass das Implantat schneller mit Knochenzellen besiedelt wird als bei einer glatten Oberfläche.

Die Einheilzeit wird verkürzt, wenn die Bohrer und das Zahnimplantat derart aufeinander abgestimmt sind, so dass die Knochenzellen nur einen geringen Spalt überbrücken müssen.

Ferner sind unterschiedliche Verschraubungen zwischen einem Implantataufbau und dem Zahnimplantat bekannt. Hierzu weist das Zahnimplantat ein Sackloch mit einem Innengewinde auf.

Aus der EP 2 735 279 A1 ist ein Zahnimplantat mit einem Sackloch bekannt, wobei in dem Sackloch ein Innengewinde ausgebildet ist. Der Implantataufbau und das Zahnimplantat mit dem Sackloch sind nun durch eine Schraube miteinander verbindbar, wobei der Eingriff zwischen dem Gewindeabschnitt der Verschraubung und dem Innengewinde des Sackloches ausschließlich in einer dem Implantataufbau abgewandten, unteren Hälfte des Implantatkörpers besteht.

Es sind Zahnimplantate mit unterschiedlichen Außengewindebereichen bekannt.

Beispielsweise ist aus der WO 2010/105965 A1 ein konusförmiges Zahnimplantat bekannt. Das Zahnimplantat weist ein mikrostrukturiertes oder mittelstrukturiertes Gewinde mit einer Tiefe der Gewindegänge zwischen 0,05 und 0,13 mm in einem oberen Bereich und makrostrukturiertes Gewinde in einem unteren Bereich auf, wobei der obere Bereich sich über 50 % bis 65 % der Höhe des Implantats erstreckt.

Aus der WO 2014/091345 A2 ist ein Zahnimplantat mit einem Implantatkörper bekannt. Der Implantatkörper ist mit einem Außengewinde versehen. In einem apikalen Bereich des Grundkörpers ist ein "Powergewinde" vorgesehen, dessen Gewindetiefe 0,2 mm bis 2 mm beträgt. Im zervikalen Bereich ist ein Mikrogewinde vorhanden, dessen Gewindetiefe 0,04 mm beträgt.

Aus der WO 2012/126 466 A1 ist ein Zahnimplantat mit einem ersten konischen und einem zweiten zylindrischen Schraubteil bekannt gewesen ist, wobei der erste Schraubteil ein progressives Gewinde und der zweite Schraubteil ein Feingewinde aufweist. Das Implantat besteht aus Titan. Durch eine Oberflächenbehandlung des Titans wird die Oberfläche maßgeblich vergrößert und eine optimale Osseointegration soll durch eine verstärkte Anlagerung knochendbildender Zellen am Implantat erreicht werden. Die komplette Oberfläche des Implantats ist geätzt und/oder gesandstrahlt. Die Rauheit der Oberfläche liegt im Bereich 0,5 bis 5Ra, bevorzugt im Bereich 1,6 bis 3,2 Ra.

Aus der WO 2005/112 816 A1 ist ein Zahnimplantat mit einem Gewinde versehenen enossalen Bereich, mit einem mittleren Bereich und einem koronalen Bereich bekannt, wobei der enossale Bereich drei unterschiedliche Gewindeabschnitte umfasst. Im apikalen Gewindeabschnitt ist eine hohe Gewindetiefe insbesondere zwischen 0,25 mm bis 0,4 mm vorgesehen. Der mittlere Gewindeabschnitt weist eine leicht konisch verlaufende Gewindetiefe aus. Der koronale Gewindeabschnitt weist eine geringere Gewindetiefe auf, welche zu einem Formschluss mit dem festen Knochen führen soll. Diese Gewindetiefe beträgt ca. 30 % bis 50 % der Tiefe des Gewindes im apikalen Gewindeabschnitt. Der gesamte enossale Bereich des Zahnimplantats ist so konditioniert, dass sich eine Mikro- und eine Makroretentionsmöglichkeit ergeben. Dies kann durch Strahlen mit Al₂O₃ zur Erzeugung der Makrorauheit und/oder durch chemisches Ätzen zur Erzeugung der Mikrorauheit erfolgen. Zusätzlich kann in diesem Bereich eine Beschichtung bspw. aus Calciumphosphat aufgebracht werden, welche die Osseointegration fördern soll.

Ein Zahnimplantat mit einem Mehrfachgewinde ist aus der DE 297 14 798 U1 bekannt. Das Zahnimplantat weist einen Gewindebereich mit dem Mehrfachgewinde und einen zylindrischen Halsbereich ohne Gewinde auf. Der Abstand zwischen den Gewindegängen beträgt 0,4 bis 0,8 mm. Die Tiefe der Gewindegänge beträgt 0,1 bis 0,5 mm. Das Gewinde kann an einer oder mehreren Stellen durch Löcher oder Gruben unterbrochen sein zur besseren Knochendurchwachsung. Das Gewinde verhält sich wie ein selbstschneidendes Gewinde.
Aus der US 5,885,079 A ist ein transgingivales Implantat mit einem distalen gewindelosen Ende und mit weiteren Bereichen mit einem makroskopischen Gewinde bekannt. Das distale Ende weist keine Zylinderform, sondern eine Ausstülpung auf. Das distale Ende weist eine Oberflächenrauigkeit R_{T} von 10 Mikrometer auf, ein Übergangsbereich weist eine Oberflächenrauigkeit R_{T} von 15 bis 20 Mikrometer auf und ein weiterer Bereich weist eine Oberflächenrauigkeit R_{T} von mindestens 25 Mikrometer auf. Ein apikaler Bereich ist wieder glatter. Die Bereiche mit ansteigender Rauhigkeit sind eingeklammert von Bereichen mit einer geringeren Rauhigkeit. Die Spitze ist stumpf und abgeflacht ausgebildet. Das Implantat weist ein transimplantäres Loch auf.

Aus der EP 2 002 799 A1 ist ein keramisches Implantat mit einer Beschichtung zur Verbesserung der Osseointegration bekannt. Ein intraossärer Teil weist ein einteiliges Gewinde auf. Die Oberfläche des Implantats ist mittels einer Beschichtung mit Calcium Phosphat strukturiert, die eine höhere Affinität und eine bessere Wirkung auf die Osteoblasten entfalten soll.

Aus der DE 20 2007 004 943 U1 ist ein einteiliges Schraubenimplantat mit einem Kompressionsgewinde in einem apikalen Bereich, einem Mikrogewinde in einem mittleren Bereich und einem gewindelosen distalen Bereich bekannt. Die Tiefe der Gewindegänge des Kompressionsgewindes steigt von apikal nach coronal an.

Aus der gattungsbildenden EP 2 233 108 A1 ist ein Zahnimplantat mit einem Implantatkörper bekannt. Der Implantatkörper weist einen mittelstrukturierten Bereich mit einem Mikrogewinde und ein weiter apikal ausgebildetes Mehrfachgewinde auf. Das Mehrfachgewinde weist eine Strukturierung in Form von wulstartigen Erhebungen oder in Form von Kanälen mit einer Tiefe von 0,05 bis 0,1 mm auf. Die Strukturierung dient der Verteilung von Blut und Zellen und nicht der Erhöhung der Festigkeit des Implantats im Knochen. Die Gewindegänge sind gleich hoch. An einem weiter apikal liegenden Bereich endet das Mehrfachgewinde. Dieser apikale Bereich ist stumpf und gewindelos ausgebildet. Der Implantatkörper weist eine Schneidnut im Bereich des Mehrfachgewindes und des apikalen Bereichs zum Abtransport und zum aggressiven Vortrieb auf. Ein distaler Bereich kann durch eine konisch sich verjüngende, gewindelose Schulter gebildet sein. Die axiale Länge der Schulter beträgt nicht mehr als 4 % der Implantatlänge. Ein Sackloch weist einen konischen Verbindungsbereich, einen hexagonalen Bereich und ein Haltegewinde auf.

Der Erfindung liegt die Aufgabe zugrunde, das gattungsbildende Zahnimplantat derart auszugestalten und weiterzubilden, so dass das eingangs genannte, gattungsbildende Zahnimplantat verbessert ist.

Diese der Erfindung zugrunde liegende Aufgabe wird nun durch ein Zahnimplantat mit den Merkmalen des Patentanspruches 1 gelöst.

Die Oberflächenstruktur ist biologiegemäß in Bereichen angepasst. Der Implantatkörper weist einen mittelstrukturierten Bereich auf, wobei eine Struktur im mittelstrukturierten Bereich eine geringere Tiefe als die Tiefe des Mehrfachgewindes aufweist, wobei die Oberflächenrauhigkeit zumindest teilweise im apikalen Bereich des Mehrfachgewindes größer ist als im mittelstrukturierten Bereich. Die Oberflächenstrukturierung im mittelstrukturierten Bereich ist somit kleiner als die Oberflächenstrukturierung im Bereich des Mehrfachgewindes. Dadurch, dass die Oberflächenrauhigkeit und die Oberflächenstrukturierung in dem apikalen Bereich größer als in dem benachbarten mittelstrukturierten Bereich sind, ist das Zahnimplantat besonders gut an den Aufbau des Knochens angepasst. Dieser apikale Bereich verheilt in einem weicheren, insbesondere spongiösen Knochengewebe, während der weiter distal liegende mittelstruktierte Bereich eine geringere Oberflächenrauhigkeit und eine geringere Strukturierung aufweist. Die Anpassungsfähigkeit des Knochens ist im apikalen Bereich größer als im mittelstrukturierten Bereich, weshalb die Rauhigkeit und auch die Strukturierung des Implantats vom apikalen Ende hin zum distalen Ende abnehmen. Dies hat den Vorteil, dass das Zahnimplantat insbesondere zur sicheren Osseointegration und optimalen Unterstützung der biologischen Prozesse bei der Einheilung geeignet ist.

Der Mittenrauhwert RA im apikalen Bereich kann bspw. zwischen 3 und 8 Mikrometern liegen. Vorzugsweise liegt der Mittenrauhwert RA im apikalen Bereich mit dem Mehrfachgewinde zwischen 4,5 und 7,5 Mikrometern. Die Rauhtiefe Rz liegt an der Spitze zwischen 25 und 45 Mikrometern liegen.

Mittels des Mehrfachgewindes sind definierte Drehmomente beim Einschrauben des Zahnimplantats erzielbar. Das Doppelhubgewinde dient dabei zum einen zur Knochenverdichtung und zum anderen hat sich herausgestellt, dass die Form eines Doppelhubgewindes zusammen mit der größeren Rauheit im apikalen Bereich eine sehr gute Schnittstelle bzw. ein sehr gutes Interface zur Osseointegration bildet. Dadurch, dass ein Mehrfachgewinde verwendet wird, kann die Flankensteilheit der einzelnen Gewindegänge vermindert werden. Insbesondere wird ein Doppelhubgewinde verwendet. Vorzugsweise sind hierbei ein größerer erster Gewindegang und ein kleinerer zweite Gewindegang vorgesehen. Die Tiefe des Mehrfachgewindes gemessen ausgehend von dem größeren Gewindegang kann bspw. 0,6 mm betragen. Die Struktur im mittelstrukturierten Bereich kann bspw. eine Tiefe von 0,3 mm aufweisen. Diese Ausgestaltung ist vorteilhaft für die Osseointegration.

Dieser apikale Bereich des Implantats ist insbesondere mit einer entsprechenden Spitzenkonfiguration ausgestattet, um vorzugsweise einen stumpfen Vortrieb zu erzielen. Das Doppelhubgewinde bzw. das Mehrfachgewinde verhindert das Ausbrechen von einzelnen Gewindegängen, durch zu steile Flanken und somit zu hohe Scherkräfte beim Eindrehen.

Der apikale Bereich weist vorzugsweise zum einen eine Spitzenkonfiguration auf, die bspw. konusförmig zulaufen kann bzw. sich verjüngt und einen Abschnitt mit einer im Wesentlichen zylindrischen Hüllkurve, innerhalb in der sich das restliche Mehrfachgewinde erstreckt. Anschließend an diesen Abschnitt mit der zylindrischen Hüllkurve grenzt der mittelstrukturierte Bereich. Das Implantat weist vorzugsweise im mittelstrukturierten Bereich ebenfalls eine zylindrische Hüllkurve auf, wobei der Durchmesser im Wesentlichen dem Durchmesser im apikalen Bereich mit dem Mehrfachgewinde entspricht.

Die Rauheit der Oberfläche des Implantatkörpers kann in einer Ausgestaltung sprunghaft von dem apikalen Bereich zu dem mittelstrukturierten Bereich abnehmen. Alternativ ist es auch möglich, dass die Rauheit kontinuierlich bis zum distalen Ende des Implantats verringert wird.

Der mittelstrukturierte Bereich kann insbesondere durch ein Gewinde, insbesondere ein Feingewinde gebildet sein. Die Struktur im mittelstrukturierten Bereich ist sichtbar und weist eine bestimmt Tiefe auf. Der mittelstrukturierte Bereich weist eine Struktur auf, die weniger stark ausgeprägt ist als das Mehrfachgewinde, aber mehr Struktur als ein rein zylindrischer Bereich ohne Gewinde aufweist. Das Gewinde kann insbesondere eine im Vergleich zum Mehrfachgewinde forcierte, d.h. größere Steigung aufweisen, um den Vortrieb zu unterstützen, sobald das Gewinde im mittelstrukturierten Bereich greift. Wenn der mittelstrukturierte Bereich ein entsprechendes Gewinde aufweist, so ist die Gewindetiefe insbesondere kleiner als die Gewindetiefe des Doppelhubgewindes. Die Steigung dieses Gewindes im mittelstrukturierten Bereich ist größer als die Steigung des Mehrfachgewindes, insbesondere des Doppelhubgewindes. Dieses Gewinde unterstützt den Vortrieb beim. Einschrauben des Implantats. Der im Vergleich mit dem Doppelhubgewinde geringer strukturierte, mittelstrukturierte Bereich ist abgestimmt auf die in der Regel zellärmeren Bereiche des Knochens. Dadurch, dass dieser mittelstrukturierte Bereich eine geringere Gewindetiefe als das Doppelhubgewinde aufweist, muss sich hier weniger Knochenmaterial anlagern, um einen entsprechenden festen Verbund zu bilden. Dies ist im zellärmeren kortikalen Knochen von biologischem Vorteil, denn hierdurch ist das Zahnimplantat besonders gut an den Einheilungsprozess angepasst. In alternativer Ausgestaltung kann der mittelstrukturierte Bereich anstatt eines Gewindes Längsrillen, eine Wendelung oder eine Kreuzverzahnung aufweisen, wobei die Tiefe dieser Strukturen insbesondere kleiner als die Gewindetiefe des Mehrfachgewindes ist. Auch diese alternativ genannten Strukturen bedeuten eine makroskopische Vergrößerung der Oberfläche im mittelstruturierten Bereich. Da diese alternativen Strukturen jedoch nicht den Vortrieb unterstützen, ist die Ausgestaltung mit einem Gewinde im mittelstrukturierten Bereich bevorzugt.

Benachbart zu dem mittelstrukturierten Bereich ist ein distaler Bereich bzw. ein Schulterbereich vorhanden, wobei dieser Schulterbereich gewindelos ausgebildet ist. Die Oberflächenstrukturierung dieses distalen Bereiches ist somit kleiner als die Oberflächenstrukturierung im mittelstrukturierten Bereich und somit auch wesentlich kleiner als die Oberflächenstrukturierung im Bereich des Doppelhubgewindes. Vorzugsweise ist die Oberflächenrauigkeit in diesem distalen Bereich bzw. im Schulterbereich nochmals kleiner als im mittelstrukturierten Bereich, und insbesondere erst recht kleiner als im Bereich des Mehrfachgewindes bzw. des apikalen Bereiches.

Insbesondere durch die Ausgestaltung mit drei Bereichen, nämlich mit einem gewindelosen, im Wesentlichen zylindrischen, distalen Bereich, mit einem mittelstrukturierten, mittleren Bereich mit einer größeren Rauheit und mit einem apikalen Bereich mit einem Mehrfachgewinde und einer noch größeren Rauheit ist das vorliegende Zahnimplantat insbesondere gut zur Osseointegration geeignet.

Das Zahnimplantat ist in einer Ausgestaltung als mehrteiliges Zahnimplantat ausgebildet, wobei entsprechende Implantataufbauteile mit dem Implantatkörper durch eine Schraubverbindung verbindbar sind. Hierzu weist der Implantatkörper vorzugsweise eine Aufnahme und ein sich an die Aufnahme anschließendes Sackloch auf.

Die Aufnahme kann insbesondere gestuft ausgebildet sein, Vorzugsweise kann auch die Aufnahme zum einen eine Stufe innerhalb der Aufnahme und zum anderen eine Stufe zwischen der Aufnahme und dem Sackloch aufweisen. Dadurch, dass die Aufnahme gestuft ist und somit zur Aufnahme eines Stufenzylinders geeignet ist, ist hier eine besonders gute Passung gegeben. Vorzugsweise sind entsprechende Nocken bzw. Indexierungselemente in beiden Stufen des Zylinders vorgesehen. Die entsprechenden Stirnflächen der Aufnahme an den Stufen können als Anschläge für die Aufbauteile genutzt werden. Die Innenumfangsflächen bzw. die Innenumfangsfläche der Aufnahme weist Vorzugsweise eine Konturierung auf, so dass die Aufbauteile drehfest in die Aufnahme eingreifen können. In besonders bevorzugter Ausgestaltung weist die Aufnahme sich in Axialrichtung erstreckende Nuten oder Stege auf, wobei diese Nuten oder Stege formschlüssig mit entsprechenden Stegen oder Nuten an den Aufbauteilen zusammenwirken können. In besonders bevorzugter Ausgestaltung ist die Aufnahme dabei winkelsymmetrisch aufgebaut, insbesondere im 90°-Winkel versetzt winkelsymmetrisch aufgebaut, so dass die Aufbauteile in vier verschiedene Drehpositionen in der Aufnahme anordbar sind. In bevorzugter Ausgestaltung weist die Aufnahme vier jeweils um 90° Grad beabstandete Nocken oder Nockenaufnahmen auf, die mit entsprechend 90° Grad zueinander beabstandete Nockenaufnahmen oder Nocken an den Implantataufbauteilen zusammenwirken.

Die Aufbauteile sind insbesondere über eine separate Schraube mit zwei in einem im Sackloch ausgebildeten Haltegewinden mit dem Implantatkörper verbindbar. Eines derHaltegewinde erstreckt sich dabei insbesondere im Bereich des Endes des Sackloches. Das Sackloch kann insbesondere als Sacklochbohrung oder dergleichen ausgebildet sein. Das Sackloch erstreckt sich in Längsrichtung des Implantatkörpers. Das Sackloch erstreckt sich insbesondere bis in Höhe des apikalen Bereiches. Das Sackloch erstreckt sich insbesondere bis nahe an die Spitze bzw. Spitzenkonfiguration. Das Haltegewinde erstreckt sich insbesondere ebenfalls auch in Höhe des apikalen Bereiches des Implantats. Das Haltegewinde erstreckt sich vorzugsweise nicht nur in der apikalen Hälfte des Implantatkörpers, sondern erstreckt sich zum einen in der apikalen Hälfte und ragt sogar über die apikale Hälfte des Implantatkörpers hinaus.

Das Sackloch weist zwei Haltegewinde mit mehreren Gewindebereichen auf, wobei die Gewindebereiche insbesondere unterschiedliche Durchmesser aufweisen. Die zugehörige Schraube weist zwei passende Aussengewinde mit unterschiedlichen Durchmessern auf. Ein apikaler Gewindebereich weist dabei einen kleineren Durchmesser auf als der darüberliegende, distale Gewindebereich. Dies erleichtert und beschleunigt das Einschrauben der entsprechenden Schraube zur Verbindung des Implantatkörpers mit einem Abutment. Die Schraube weist zwei passende gestufte Außengewinde auf, die passend zu den Gewindebereichen der Haltegewinde angeordnet und ausgestaltet sind.

An dem der Aufnahme zugewandten Ende des Sacklochs ist vorzugsweise ein weiteres Gewinde, das bspw. als Hilfsgewinde bezeichnet werden kann, ausgebildet. Dieses Hilfsgewinde weist einen größeren Gewindedurchmesser als das Haltegewinde oder die Haltegewindebereiche auf. Mittels des Hilfsgewindes ist es möglich, weitere Sekundärteile bei der Behandlung mit dem Implantatkörper zu verbinden, ohne hierbei das tiefliegende Haltegewinde nutzen zu müssen. Das Hilfsgewinde kann insbesondere weniger Gewindegänge aufweisen, zur schnellen Befestigung von entsprechenden Gewindeteilen.

Die eingangs genannten Nachteile sind daher vermieden und entsprechende Vorteile sind erzielt.

Es gibt nun eine Vielzahl von Möglichkeiten, das erfindungsgemäße Zahnimplantat auszugestalten und weiterzubilden. Zunächst darf auf die dem Patentanspruch 1 nachgeordneten Patentansprüche verwiesen werden. Im Folgenden wird eine bevorzugte Ausgestaltung des erfindungsgemäßen Zahnimplantats anhand der Zeichnung und der zugehörigen Beschreibung näher erläutert. In der Zeichnung zeigt:

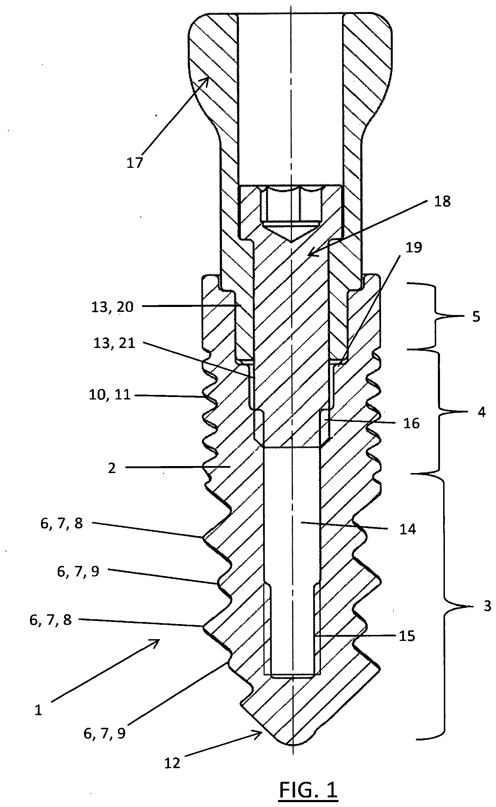

- Fig. 1: in einer schematischen geschnittenen Darstellung ein enossales Zahnimplantat mit einem Implantatkörper, einem Abutment, das mit einer Schraube im Zahnimplantat fixiert ist.

In Fig. 1 ist ein Zahnimplantat 1 mit einem Implantatkörper 2 gut zu erkennen.

Das Zahnimplantat 1 ist erfindungsgemäß als Keramikimplantat ausgebildet. Der Implantatkörper 2 weist vorzugsweise Zirkonoxid, insbesondere Yttriumoxid teilstabilisiertes Zirkonoxid auf. Ein bevorzugter Werkstoff ist ATZ (Alumina Toughened Zirkonia). Bevorzugte Werkstoffe sind insbesondere optimierte Zirkonkeramiken, die die Werkstoffeigenschaften zur Nutzung verbessern. Nicht erfindungsgemäß kann das Zahnimplantat als Titanimplantat ausgebildet sein.

Der Implantatkörper 2 weist nun an der Außenseite drei Bereiche 3, 4, 5 auf.

Der Bereich 3 ist der größte Bereich, der Bereich 4 ist der zweitgrößte und der Bereich 5 ist der kleinste.

In dem apikalen Bereich 3 weist der Implantatkörper 2 ein Mehrfachgewinde 6, insbesondere ein Doppelhubgewinde 7 auf. Der apikale Bereich 3 weist somit eine sichtbare Makrostruktur auf. Der apikale Bereich 3 ist somit als makrostrukturierter Bereich ausgebildet. Das Doppelhubgewinde 7 weist einen größeren ersten Gewindegang 8 und einen kleinerer zweiten Gewindegang 9 aufweist. In alternativer Ausgestaltung können die Gewindegänge 8, 9 auch die gleiche Größe aufweisen.

Die eingangs genannten Nachteile sind nun dadurch vermieden, dass der Implantatkörper 2 einen mittelstrukturierten Bereich 4 aufweist, wobei eine Struktur 10 im mittelstrukturierten Bereich 4 eine geringere Tiefe als die Tiefe des Mehrfachgewindes 6 aufweist, wobei zumindest teilweise die Oberflächenrauhigkeit im apikalen Bereich 3 des Mehrfachgewindes 6 größer als im mittelstrukturierten Bereich 4 ist. Die Struktur 10 ist ebenfalls mitbloßem Auge sichtbar.

Die Verwendung der Struktur 10 hat den Vorteil, dass der Knochen mit der Struktur 10 einen festen Verbund eingehen kann, wobei die geringere Anpassungsfähigkeit des Knochens in diesem mittelstruktierten Bereich 4 durch die geringere Tiefe und die verminderte Rauhigkeit der Struktur 10 berücksichtigt wird. Die Struktur 10 ist sichtbar und weist eine Tiefe größer als 0 cm auf.

Die Struktur 10 ist vorzugsweise durch ein feineres Gewinde 11 gebildet. Die Tiefe dieses Gewindes 11 ist geringer als die Tiefe des Mehrfachgewindes 6. Dies hat den Vorteil, dass der Implantatkörper 2 beim Einschrauben durch das Gewinde 11 zusätzlichen Vortrieb erfährt. Alternativ kann die Struktur 10 als Längsschlitze, Querrillen, Kreuzverzahnung oder dgl. ausgebildet sein.

Benachbart zu dem mittelstrukturierten Bereich 4 ist ein distaler Bereich 5 vorhanden, der auch als Schulterbereich bezeichnet werden kann. Der distale Bereich 5 ist gewindelos ausgebildet. Im distalen Bereich 5 ist keine mit bloßem Auge sichtbare Makrostrukturierung vorhanden, lediglich eine Mikrostrukturierung durch eine entsprechende Oberflächenrauheit. Dieser distale Bereich 5 ermöglicht es, dem zellarmen corticalen Knochen atraumatische Besiedelungsflächen anzubieten. Die Osseointegration ist verbessert. Im distalen Bereich 5 kann der Mittenrauwert Ra zwischen 1.5 und 2 Mikrometern betragen.

In einer Ausgestaltung ist die Oberflächenrauhigkeit im distalen Bereich 5 kleiner als die Oberflächenrauhigkeit im mittelstrukturierten Bereich 4. Es ist jedoch denkbar, dass die Oberflächenrauhigkeit im distalen Bereich 4 und im mittelstrukturierten Bereich 4 jeweils ungefähr gleich ist und bspw. der Mittenrauhwert Ra jeweils zwischen 1.5 und 2 Mikrometern beträgt.

Der Mittenrauhwert Ra liegt im apikalen Bereich zwischen 3 und 8 Mikrometern. Der Mittenrauhwert Ra liegt vorzugsweise im apikalen Bereich zwischen 4,5 und 7,5 Mikrometern. Der Mittenrauhwert RA kann im mittelstrukturierten Bereich zwischen 2 und 7,5 Mikrometern liegen.

Die Strukturierung nimmt vom apikalen Ende des Implantatkörpers 2 hin zum distalen Ende ab. Dies Verbessert die Osseointegration. Der apikale Bereich 3 ist nach dem Einschrauben von spongiösem Knochengewebe umgeben, das sich gut an die Strukturierung des Mehrfachgewindes anpassen kann. Zum corticalen Knochen hin nimmt die Anpassungsfähigkeit ab. Daher ist durch den weniger strukturierten, mittelstrukturierten Bereich 4 zwar eine vergrößerte Oberfläche vorhanden, aber die Tiefe der Struktur 10 ist gegenüber dem benachbarten Mehrfachgewinde 6 reduziert.

Der Implantatkörper 2 weist eine Aufnahme 13 und ein in die Aufnahme 13 mündendes Sackloch 14 auf, wobei in dem Sackloch 14 mindestens ein Haltegewinde 15, 16 ausgebildet ist. Im Sackloch 14 sind zwei beabstandete Haltegewinde 15, 16 ausgebildet. Das eine Haltegewinde 14 ist am apikalen Ende des Sackloches 14 ausgebildet. Dies ermöglicht eine tiefe Verschraubung eines Abutments 17, so dass Spannungen durch die Verschraubung von dem Schulterbereich zur apikalen Spitze 12 zumindest teilweise verlagert werden. Das Haltegewinde 14 ist in der apikalen Hälfte des Implantatkörpers 2 und das Haltegewinde 15 ist in der distalen Hälfte des Implantatkörpers 2 ausgebildet. Hierdurch ist die Verschraubungsspannung auf die beiden Haltegewinde 15, 16 aufgeteilt. In Fig. 1 ist dargestellt, dass das Abutment 17 mittels einer Schraube 18 an den Haltegewinden 15, 16 angebracht ist.

Das andere Haltegewinde 16 weist einen kleineren Durchmesser auf und ist beabstandet zum Haltegewinde 15 angeordnet. Dies ermöglicht es, dass eine Schraube 18 mit zwei Außengewinden (nicht näher dargestellt) mit jeweils unterschiedlichen, passenden Durchmessern zu verwenden, die zur schnellen Verschraubung genutzt wird, da beim Eindrehen beide Haltegewinde 15, 16 gleichzeitig in die Außengewinde der Schraube 18 eingreifen.

Ferner ist vorzugsweise ein Hilfsgewinde 22 zum Anbringen von entsprechenden Sekundärteilen während der Behandlung genutzt werden. Das Hilfsgewinde 22 kann einen Außendurchmesser von M1,6 haben.

Es ist denkbar, dass drei Gewinde im Sackloch 14 ausgebildet sind, nämlich die zwei Haltegewinde 15, 16 und das insbesondere an die Aufnahme 13 angrenzende Hilfsgewinde 22. Das Hilfsgewinde 22 weist den größten Durchmesser auf. Das mittlere Haltegewinde 15 weist einen mittleren Durchmesser auf und kann bspw. einen Durchmesser von M1,2 haben. Das apikale Haltegewinde 16 weist den kleinsten Durchmesser auf und kann bspw. einen Durchmesser von M1,0 haben.

Die Aufnahme 13 weist eine Stufe 19 und somit zwei Segmente 20, 21 auf, die unterschiedliche Durchmesser aufweisen. Diese gestufte Aufnahme 13 ermöglicht einen präzisen, spannungsfreien Sitz der Abutmentschulter. Es sind insbesondere das Abutment 17 und in der Aufnahme 13 Indexierungselemente, bspw. entsprechende Nuten und passende Stege, vorzugsweise um 90 ° beabstandet angeordnet, die zur Rotationssicherung dienen (nicht näher dargestellt).

### Bezugszeichenliste:

- 1: Zahnimplantat
- 2: Implantatkörper
- 3: apikaler Bereich
- 4: mittelstrukturierter Bereich
- 5: distaler Bereich/Schulterbereich
- 6: Mehrfachgewinde
- 7: Doppelhubgewinde
- 8: erster Gewindegang
- 9: zweiter Gewindegang
- 10: Struktur
- 11: Gewinde
- 12: Spitze
- 13: Aufnahme
- 14: Sackloch
- 15: Haltegewinde
- 16: Haltegewinde
- 17: Abutment
- 18: Schraube
- 19: Stufe
- 20: Segment
- 21: Segment
- 22: Hilfsgewinde

## Patentansprüche

1. Zahnimplantat (1) mit einem Implantatkörper (2), wobei der Implantatkörper (2) in einem apikalen Bereich (3) eine Makrostruktur in Form eines Mehrfachgewindes (6) aufweist, wobei der Implantatkörper (2) einen mittelstrukturierten, mittleren Bereich (4) mit einer Struktur (10) aufweist, wobei die Struktur (10) im mittelstrukturierten, mittleren Bereich (4) eine geringere Tiefe als die Tiefe des Mehrfachgewindes (6) aufweist, wobei zumindest teilweise die Oberflächenrauhigkeit im apikalen Bereich (3), nämlich im Bereich (3) des Mehrfachgewindes (6) größer als im mittelstrukturierten, mittleren Bereich (4) ist, wobei benachbart zu dem mittelstrukturierten Bereich (4) ein distaler Bereich (5) vorhanden ist, wobei der distale Bereich (5) zylindrisch und gewindelos ausgebildet ist, wobei der Implantatkörper (2) eine Aufnahme (13) und ein in die Aufnahme (13) mündendes Sackloch (14) aufweist, wobei in dem Sackloch (14) zwei Haltegewinde (15, 16) ausgebildet sind, wobei die zwei Haltegewinde (15, 16) voneinander beabstandet sind, **dadurch gekennzeichnet, dass** das Zahnimplantat (1) als Keramikimplantat ausgebildet ist.

2. Zahnimplantat nach Anspruch 1, **dadurch gekennzeichnet, dass** das Mehrfachgewinde (6) ein Doppelhubgewinde (7) ist.

3. Zahnimplantat nach Anspruch 2, **dadurch gekennzeichnet, dass** das Doppelhubgewinde (7) einen größeren ersten Gewindegang (8) und einen kleineren zweiten Gewindegang (9) aufweist.

4. Zahnimplantat nach einem der vorstehenden Ansprüche, **dadurch gekennzeichnet, dass** der mittelstrukturierte Bereich (4) ein Gewinde (11) aufweist, wobei die Tiefe dieses Gewindes (11) geringer ist als die Tiefe des Mehrfachgewindes (6).

5. Zahnimplantat nach einem der vorstehenden Ansprüche, **dadurch gekennzeichnet, dass** ist die Oberflächenrauhigkeit im distalen Bereich (5) kleiner als die Oberflächenrauhigkeit im mittelstrukturierten Bereich (4) ist.

6. Zahnimplantat nach einem der vorstehenden Ansprüche, **dadurch gekennzeichnet, dass** der Mittenrauhwert RA im apikalen Bereich zwischen 3 und 8 Mikrometern liegt.

7. Zahnimplantat nach einem der vorstehenden Ansprüche, **dadurch gekennzeichnet, dass** der Mittenrauhwert RA im mittelstrukturierten Bereich (4) zwischen 2 und 7,5 Mikrometern liegt.

8. Zahnimplantat nach dem vorstehenden Anspruch, **dadurch gekennzeichnet, dass** eines der Haltegewinde (15) im Sackloch (14) sich am Ende des Sackloches (14) befindet, wobei das Ende des Sackloches (14) in Höhe des apikalen Bereiches (3) liegt.

9. Zahnimplantat nach einem der vorstehenden Ansprüche, **dadurch gekennzeichnet, dass** die Haltegewinde (15, 16) unterschiedliche Durchmesser aufweisen.

10. Zahnimplantat nach einem der vorstehenden Ansprüche , **dadurch gekennzeichnet, dass** ein Haltegewinde (15) in der apikalen Hälfte des Implantatkörpers (2) und ein Haltegewinde (16) in der distalen Hälfte des Implantatkörpers (2) ausgebildet ist.

11. Zahnimplantat nach einem der vorstehenden Ansprüche , **dadurch gekennzeichnet, dass** ein Hilfsgewinde (22) im Sackloch (14) ausgebildet ist zum Anbringen von Sekundärteilen während der Behandlung.

## Claims

1. Dental implant (1) with an implant body (2), wherein the implant body (2) has, in an apical region (3), a macro-structure in the form of a multiple thread (6), wherein the implant body (2) has a micro-structured central region (4) with a structure (10), wherein the structure (10) in the micro-structured central region (4) has a depth less than the depth of the multiple thread (6), wherein the surface roughness in the apical region (3), namely in the region (3) of the multiple thread (6), is at least in part greater than in the micro-structured central region (4), wherein a distal region (5) is present adjacent to the micro-structured central region (4), wherein the distal region (5) is cylindrical and threadless, wherein the implant body (2) has a receptacle (13) and a blind hole (14) opening into the receptacle (13), wherein two holding threads (15, 16) are formed in the blind hole (14), wherein the two holding threads (15, 16) are spaced apart from each other, **characterized in that** the dental implant (1) is designed as a ceramic implant.

2. Dental implant according to Claim 1, **characterized in that** the multiple thread (6) is a double thread (7).

3. Dental implant according to Claim 2, **characterized in that** the double thread (7) has a larger first thread turn (8) and a smaller second thread turn (9).

4. Dental implant according to one of the preceding claims, **characterized in that** the micro-structured region (4) has a thread (11), wherein the depth of this thread (11) is less than the depth of the multiple thread (6).

5. Dental implant according to one of the preceding claims, **characterized in that** the surface roughness in the distal region (5) is less than the surface roughness in the micro-structured region (4).

6. Dental implant according to one of the preceding claims, **characterized in that** the average roughness value RA in the apical region is between 3 and 8 micrometres.

7. Dental implant according to one of the preceding claims, **characterized in that** the average roughness value RA in the micro-structured region (4) is between 2 and 7.5 micrometres.

8. Dental implant according to the preceding claim, **characterized in that** one of the holding threads (15) in the blind hole (14) is located at the end of the blind hole (14), wherein the end of the blind hole (14) lies at the height of the apical region (3).

9. Dental implant according to one of the preceding claims, **characterized in that** the holding threads (15, 16) have different diameters.

10. Dental implant according to one of the preceding claims, **characterized in that** one holding thread (15) is formed in the apical half of the implant body (2), and one holding thread (16) is formed in the distal half of the implant body (2).

11. Dental implant according to one of the preceding claims, **characterized in that** an auxiliary thread (22) is formed in the blind hole (14) to allow secondary parts to be applied during the treatment.

## Revendications

1. Implant dentaire (1) comprenant un corps d'implant (2), le corps d'implant (2) présentant, dans une région apicale (3), une macrostructure en forme de filetage multiple (6), le corps d'implant (2) présentant une région centrale de structure moyenne (4) avec une structure (10), la structure (10) présentant, dans la région centrale de structure moyenne (4), une profondeur plus faible que la profondeur du filetage multiple (6), la rugosité de surface dans la région apicale (3), c'est-à-dire dans la région (3) du filetage multiple (6), étant au moins en partie supérieure à la rugosité de surface dans la région centrale de structure moyenne (4), une région distale (5) étant prévue à côté de la région de structure moyenne (4), la région distale (5) étant réalisée sous forme cylindrique et sans filetage, le corps d'implant (2) présentant un logement (13) et un trou borgne (14) débouchant dans le logement (13), deux filetages de retenue (15, 16) étant réalisés dans le trou borgne (14), les deux filetages de retenue (15, 16) étant espacés l'un de l'autre, **caractérisé en ce que** l'implant dentaire (1) est réalisé sous forme d'implant en céramique.

2. Implant dentaire selon la revendication 1, **caractérisé en ce que** le filetage multiple (6) est un filetage à deux hauteurs de filet (7).

3. Implant dentaire selon la revendication 2, **caractérisé en ce que** le filetage à deux hauteurs de filet (7) présente un premier pas de filetage (8) plus grand et un deuxième pas de filetage (9) plus petit.

4. Implant dentaire selon l'une quelconque des revendications précédentes, **caractérisé en ce que** la région de structure moyenne (4) présente un filetage (11), la profondeur de ce filetage (11) étant inférieure à la profondeur du filetage multiple (6).

5. Implant dentaire selon l'une quelconque des revendications précédentes, **caractérisé en ce que** la rugosité de surface dans la région distale (5) est inférieure à la rugosité de surface dans la région de structure moyenne (4).

6. Implant dentaire selon l'une quelconque des revendications précédentes, **caractérisé en ce que** la valeur de rugosité moyenne RA dans la région apicale est comprise entre 3 et 8 µm.

7. Implant dentaire selon l'une quelconque des revendications précédentes, **caractérisé en ce que** la valeur de rugosité moyenne RA dans la région de structure moyenne (4) est comprise entre 2 et 7,5 µm.

8. Implant dentaire selon la revendication précédente, **caractérisé en ce que** l'un des filetages de retenue (15) dans le trou borgne (14) se trouve au niveau de l'extrémité du trou borgne (14), l'extrémité du trou borgne (14) étant située à la hauteur de la région apicale (3).

9. Implant dentaire selon l'une quelconque des revendications précédentes, **caractérisé en ce que** les filetages de retenue (15, 16) présentent des diamètres différents.

10. Implant dentaire selon l'une quelconque des revendications précédentes, **caractérisé en ce qu'**un filetage de retenue (15) est réalisé dans la moitié apicale du corps d'implant (2) et un filetage de retenue (16) est réalisé dans la moitié distale du corps d'implant (2).

11. Implant dentaire selon l'une quelconque des revendications précédentes, **caractérisé en ce qu'**un filetage auxiliaire (22) est réalisé dans le trou borgne (14) pour le montage de pièces secondaires pendant le traitement.
